## Europäisches Patentamt

(19) European Patent Office

Office européen des brevets

(11) Publication number: **0 100 380**
**B1**

(12) # EUROPEAN PATENT SPECIFICATION

(45) Date of publication of patent specification: **16.06.87**

(51) Int. Cl.⁴: **C 04 B 35/58**

(21) Application number: **82304036.5**

(22) Date of filing: **30.07.82**

(54) **Method for plastic deformation of non-ferrous metals.**

(43) Date of publication of application:
**15.02.84 Bulletin 84/07**

(45) Publication of the grant of the patent:
**16.06.87 Bulletin 87/25**

(84) Designated Contracting States:
**BE DE FR GB IT**

(56) References cited:
**FR-A-2 376 090**
**GB-A-1 365 126**
**GB-A-1 482 465**
**GB-A-2 062 688**
**GB-A-2 063 302**
**US-A-3 974 555**
**US-A-4 179 301**
**US-A-4 216 021**
**US-A-4 218 257**
**US-A-4 332 909**

**DRAHTWELT, vol. 11, 1977, D.C. NICHOLS**
**"Silizium-Nitrid als Werkstoff für Werkzeuge**
**zur spanlosen Umformung", pages 434-436**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Uemura, Ikuji, c/o Yokohama Works**
**Sumitomo Electric Industries,Ltd 1, Taya-cho**
**Totsuka-ku Yokohama-shi Kanagawa (JP)**
Inventor: **Ono, Fumio c/o Yokohama Works**
**Sumitomo Electric Industries, Ltd 1, Taya-cho**
**Totsuka-ku Yokohama-shi Kanagawa (JP)**
Inventor: **Kamijo, Eiji c/o Itami Works**
**Sumitomo Electric Industries, Ltd**
**1-1 Koyakita 1-chome Itami-shi Hyogo (JP)**
Inventor: **Nishimoto, Tatsuya c/o Itami Works**
**Sumitomo Electric Industries, Ltd**
**1-1 Koyakita 1-chome Itami-shi Hyogo (JP)**
Inventor: **Higuchi, Matsuo c/o Itami Works**
**Sumitomo Electric Industries, Ltd**
**1-1 Koyakita 1-chome Itami-shi Hyogo (JP)**

(74) Representative: **Warren, Anthony Robert et al**
**BARON & WARREN 18 South End Kensington**
**London W8 5BU (GB)**

Courier Press, Leamington Spa, England.

## Description

The invention relates to the plastic deformation, for example pipe drawing, wire drawing, rod rolling, sheet rolling, extrusion and die casting, of copper, aluminium, zinc, tin, nickel, cobalt, titanium and alloys thereof.

Conventionally, cemented carbide, die steel, high-speed steel and the like were used for plastic deformation tools for use in pipe drawing, wire drawing, cold rolling, etc. of the aforedescribed nonferrous metals and alloys thereof.

The production conditions of mass-produced articles represented by wire drawing rolls and the like have become severer year after year due to demand for higher precision and greater economical efficiency. Thus, for the plastic deformation tools too, the demand is increasing for improved resistance to heat, wear, thermal shock and the like.

In order to meet the demand, new materials are being developed one after another in the field of cemented carbide, die steel, high-speed steel, etc. However, new materials having the aforesaid characteristics, suitable for deforming nonferrous metals, have not yet been found.

As described hereinbefore, the materials of the plastic deformation tools used hitherto for nonferrous metals generally comprised steels, such as tool steel, and cemented carbide. There has been very little progress in the development of new materials for plastic deformation tools.

Ceramics is now attracting attention as a new material for plastic deformation tools. However, since its shock resistance, thermal shock resistance, etc. are inferior due to its fragility to those of the aforesaid materials, ceramics is beginning to be used only in the field of guide rolls and the like subjected to relatively small stress. Thus the idea of employing ceramics as a material for rolling rolls has scarcely been conceived heretofore.

The inventors concerned have arrived at the invention after a series of tests of the possibility of using ceramic materials in plastic deformation tools for nonferrous metals.

The present invention provides a method for the hot plastic deformation of a nonferrous metal selected from Cu, Al, Zn, Sn, Ni, Co, Ti and alloys thereof, characterised in that there is used as a deformation tool a $Si_3N_4$ sintered compact containing $Si_3N_4$ in an amount over 50% by weight and having a porosity below 10%.

Silicon nitride, since it is one of the ceramic materials, is not free from the aforesaid disadvantages intrinsic to ceramics. In respect of wear resistance, however, silicon nitride excels the aforedescribed metal materials, its the wear resistance particularly at high temperatures being 10—100 times as high as that of the conventional metal material. Thus the plastic deformation tools used in the method according to the invention exhibit excellent properties as hot rolling rolls for use at high temperatures.

According to the general conception of the conventional deformation tools, the useful life thereof was relatively short. Therefore, the process and equipment were designed in accordance with this general conception.

The plastic deformation tools used in the method according to the invention, since they have a useful life elongated by 10—100 times that of the conventional tools, enable to introduce a conception of including the repairs of the tools in the periodical repair program of the whole equipment. This makes it possible to obviate completely the unproductive circumstances of having to stop the whole process frequently for the replenishment of the tools.

As a result, not only the working ratio of the equipment is improved, but also the decrease in stocks arising in the course of deforming can be prevented and holding of a large number of tools becomes unnecessary.

When, for example, copper or a copper alloy is processed by a conventional plastic deformation tool, a reaction arises between said deformation tool and the workpiece consisting of copper or an alloy thereof, the repeated phenomenon of deposition and separation increasing the roughness or wear of the surface layer resulting in termination of the useful life of the tool. Particularly in hot rolling, cracks due to the phenomena of exfoliation and fatigue, commonly known as spalling, are produced on cemented carbide, die steel or high-speed steel as a result of repetition of depositing and separation. The spalling reduces the useful life of the plastic deformation tool.

Even when the workpiece consists of aluminium or zinc, the conventional plastic deformation tools made of cemented carbide, die steel or high-speed steel become useless in a short period of time as in the case of the aforedescribed copper or copper alloy.

The inventors concerned have accomplished the invention as a result of their endeavour for the elimination of the aforesaid disadvantages of the conventional plastic deformation tools.

In a preferred embodiment of the invention the materials of said plastic deformation tools comprise, in addition to $Si_3N_4$ in an amount over 50 weight %, at least one compound selected from among AlN, $Al_2O_3$, $Y_2O_3$, YN, WC, $Mo_2C$, MgO, $Mg_3N_2$, CaO, $Ca_3N_2$, $ZrO_2$, $TiO_2$, $HfO_2$, SiC, $CeO_2$, BeO, $Be_3N_2$, TiN and Al in an amount of 1—50 weight %. More preferably at least one component selected from among $Al_2O_3$, MgO, $Mg_3N_2$, BeO, $Be_3N_2$, CaO, $Ca_3N_2$, WC, $Mo_2C$ is included in an amount of 0.1—20 weight %. In another embodiment the compact contains at least one component selected from among oxides, carbides, nitrides, borides, silicides of elements of group IIIA of the Periodic Table such as Y and Ce in an amount of 0.1—25

2

weight %, and one component selected from among $Al_2O_3$, AlN, Al, in 0.1—25 weight %. In a further embodiment 10—35 weight % $Al_2O_3$ and 5—10 weight % AlN are included.

The invention will hereinunder be described in detail in reference to the accompanying drawings.

Fig. 1(A) is an elevational view of an open-sided rolling roll, one of the plastic deformation tools used in the process according to the invention.

Fig. 1(B) is a side view of the same.

Fig. 2 is a sectional view showing the state in which the opensided rolling roll of Fig. 1 is mounted on a rolling machine.

According to the invention, it is essential that the tool is composed of material in which the deposition phenomenon is infinitesimal. In fact, ceramics has smaller depositability compared with metals.

The most popular alumina ceramics is not suitable for use in plastic deformation which is subjected to high stress and heavy shocks, since said ceramics is less reliable due to its low strength.

After a series of tests of various ceramic tools, it has been found that ceramics chiefly comprising $Si_3N_4$ exhibits superior properties over the conventionally used cemented carbide and die steel as material of plastic deformation tools for use in the deformation of metals such as copper, copper alloys, aluminum and alloys thereof.

With regard to $Si_3N_4$ used as the chief material in the invention, there are known two production methods, i.e. the reaction sintering method in which pressed bodies of Si metal powder are nitrified, and the powder metallurgical method in which $Si_3N_4$ and additive are mixed. The former method, however, is not suitable for the invention, since the porosity remains over 10%.

In case of the latter method, it is known that the use of additives largely influences the characteristics of the product.

Fundamentally, however, high strength and high shock resistance are indispensable. Therefore, the use of $Si_3N_4$ over 50 weight % is necessary.

The additives preferably to be added to $Si_3N_4$ have been described in detail hereinbefore. The following is an example of the compositions thereof.

Ceramic sintered compacts comprising $Si_3N_4$ and at least one kind selected from among $Al_2O_3$, MgO, $Mg_3N_2$, BeO, $Be_3N_2$, CaO, $Ca_3N_2$, WC, $Mo_2C$, in 0.1—20 weight %, have their strength and hardness scarcely deteriorated particularly even under the conditions of use over 900°C.

Sintered compacts having porosity below 10% are obtainable by fully pulverizing a powder mixture comprising the aforedescribed components by means of a ball mill and the like, the mixture being pressed under a pressure of 0.5—4 t/cm$^2$ and then sintered in an inactive atmosphere of N, Ar, etc., an atmosphere of ammonia, $H_2$, Co, etc., or a decompressed atmosphere, at a temperature of 1600—1900°C.

Ceramic sintered compacts of $Si_3N_4$ containing 0.1—25 weight % of powders of oxides, carbides, nitrides, borides or silicides of Group IIIA elements of the periodic table, such as CeO, $Y_2O_3$, YN, etc. and 0.1—25 weight % of $Al_2O_3$, AlN, Al are utilizable as hot extrusion die, rolling roll, guide roll, etc. for copper under the conditions below 1100°C and particularly in the field of forced plastic deformation.

Ceramic sintered compacts of $Si_3N_4$ containing at least one kind selected from among AlN, $ZrO_2$, $TiO_2$, $HfO_2$, SiC, $CeO_2$, TiN in 1—20 weight % are suitable for plastic deformation tools to be used under the conditions below 800°C, and they are particularly effective in respect of toughness, wear resistance, etc. compared with the conventional steel alloy tools.

In the $Si_3N_4$-$Al_2O_3$-AlN sintered compacts, the composition may be

$$Si_6(1 - \frac{x}{8})Al - \frac{2}{3}xN(8-x)O_x$$

commonly known as sialon. A mixture of such composition and the second phase shows no particular difference in use.

It is experimentally presumable, however, that tools consisting of sintered compacts obtained by causing $Si_3N_4$ to contain $Al_2O_3$ 35 weight % and AlN 5 weight % have the longest useful life particularly in rolling at high temperatures.

With such tools, strength is decreased and reliability is reduced if there remains too much porosity. Density, therefore, is preferably as high as possible. Though porosity below 5% is suitable, porosity within 10% is tolerable in the field where the conditions of production and use of the tools are not very severe. Elements such as B, Fe, Co, Ni, if used in a small amount as additive, are also effective. $Si_3N_4$ of α type or β type can be used equally effectively.

The $Si_3N_4$ plastic deformation tools thus obtained are utilizable for processing metals comprising copper, aluminum, zinc, tin, nickel, cobalt, titanium and alloys thereof.

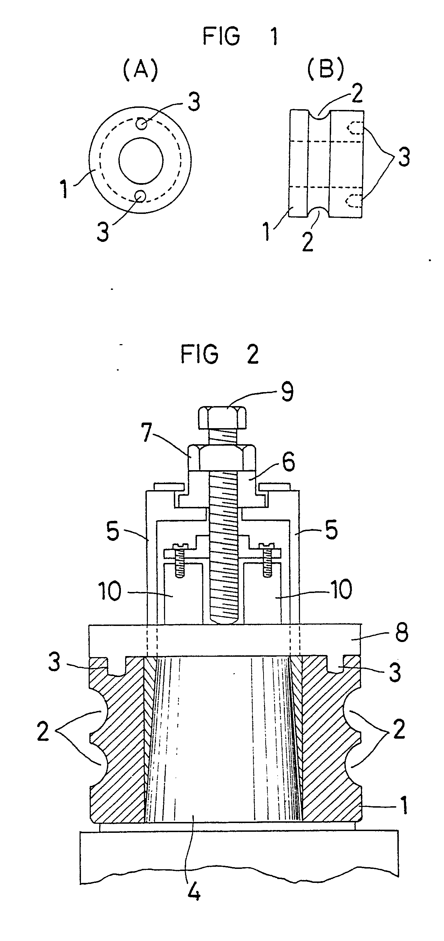

Fig. 1 shows a rolling roll for use in an open-sided rolling machine as a plastic deformation tool for use in the process according to the invention. As shown in Fig. 1, calibers 2 and key holes 3 are formed on an annular roll 1. The roll is mounted on the rolling machine as shown in Fig. 2. A tapering sleeve 5 is fitted onto a drive shaft 4 receiving a rotating force from a drive motor (not shown), the roll 1 being mounted thereon. The tapering sleeve 5 is pressed by a nut 6 and secured in place by a rock nut 7. The roll 1 is further secured with a cross key 8 fitting into the key holes 3. The cross key 8 is secured in place by a bolt 9.

**0 100 380**

Thus the roll 1 receives rotary drive force from its inner periphery through the sleeve 5, the rotation of the roll 1 being synchronized with that of a roll shaft 10 by the cross key 8.

As described hereinabove, the annular rolling roll for use in the open-sided rolling machine consists of a drum only, the drive force being transmitted to the inner periphery of the roll by the sleeve 5 in the state in which said inner periphery is under a uniform internal pressure. Thus it has been found that the roll does not necessitate such high toughness as in the case of a metal roll, and is free from cracks and similar troubles.

The roll is small in volume and easy to produce. In addition, since the cost of material, $Si_3N_4$ being expensive, can be reduced, the open-sided system is far economical than the close-sided system.

The invention will hereinunder be described in more detail in reference to the following examples. Though deformation tools for copper are described in the following examples, it is needless to mention that also in the case of processing of nonferrous metals, such as aluminum, zinc, tin, etc., the ceramic tools are found to be far better and to have a longer useful life than the conventional tools when the depositing characteristics of said nonferrous metals with ceramics are compared with those with Co and Fe which are chief components of cemented carbide and die steel.

Examples 1—9

The additive were blended with $Si_3N_4$ in the ratio as shown in Table 1 and the mixture was pulverized by a ball mill. The mixture thus obtained was pressed under a pressure of 1 $t/cm^2$ and sintered under 1 atmospheric pressure of nitrogen at 1700—1850°C for 4 hours to produce 9 kinds of the 10th step of the hot rolls for finishing copper wire.

The rolling temperature, the rolling amount until the useful life expired and the cause of such expiration are as shown in Table 1.

TABLE 1

| Example | Composition (Wt%) | Rolling temperature (°C) | Rolling amount (ton) | Cause of expiration of life |
|---|---|---|---|---|
| 1 | $95Si_3N_4-5MgO$ | 500 | 2300 | Wear |
| 2 | $85Si_3N_4-15Al_2O_3$ | 500 | 1800 | " |
| 3 | $94Si_3N_4-4MgO-2CaO$ | 500 | 1550 | " |
| 4 | $92Si_3N_4-2MgO-6Al_2O_3$ | 500 | 1900 | " |
| 5 | $89Si_3N_4-5MgO-6WC$ | 500 | 2500 | " |
| 6 | $95Si_3N_4-5Mg_3N_2$ | 500 | 2450 | " |
| 7 | $95Si_3N_4-5BeO$ | 500 | 2550 | " |
| 8 | $93Si_3N_4-5BeO-2Be_3N_2$ | 500 | 1950 | " |
| 9 | $92Si_3N_4-5Mg_3N_2-3Mo_2C$ | 500 | 3200 | " |

With the conventional rolling rolls produced from cemented carbide, die steel or high-speed steel, the useful life of the rolls expired when the rolling amount of copper wire reached 500—700 tons at the most. It was found that the useful life was prolonged by 2—5 times in case of the rolling rolls of the composition as shown in Table 1 according to the invention.

It was also found that rolling rolls had particularly prolonged useful life under the conditions below 900°C, while the life span was rapidly reduced when the temperature exceeded 900°C, resulting in deterioration of the wear resistance.

Example 10

Commercial $Si_3N_4$ 90 weight %, $Al_2O_3$ 5 weight % and $Y_2O_3$ 5 weight % were fully mixed by a ball mill, and the mixture was subjected to a static pressure of 1 $t/cm^2$ and then sintered under 1 atmospheric pressure of nitrogen at 1800°C for 4 hours to obtain the 10th step of the hot rolling rolls for finishing copper wire. The temperature of the rolling material was 500°C, the surface reduction rate being 25%, the rolling speed being 12 m/sec.

The useful life of the hot rolling rolls thus produced expired with rolling of about 1550 tons due to roughness of the surface.

4

Examples 11—19

To commercial $Si_3N_4$ were added sintering additive such as $Al_2O_3$, $Y_2O_3$, etc. in the ratio as shown in Table 2 and the mixture was fully pulverized by means of a ball mill to obtain hot rolling rolls, the 10th step for finishing copper wire under the same conditions as in Examples 1—9.

By making use of the rolls, rolling materials were rolled at temperatures of 950°C, 700°C and 500°C respectively with the other conditions same as in Example 1.

As a result, it was found that the useful life of the rolls scarcely tended to decrease even at high temperatures, and even tended to increase as shown in Table 2.

TABLE 2

| Example | Composition (wt%) | Rolling temperature (°C) | Rolling amount (ton) | Cause of expiration life |
|---|---|---|---|---|
| 10 | $90Si_3N_4$-$5Al_2O_3$-$5Y_2O_3$ | 500 | 1550 | Surface Wear |
| 11 | $80Si_3N_4$-$10Al_2O_3$-$10Y_2O_3$ | 950 | 4750 | Surface Roughness |
| 12 | " | 700 | 3650 | Surface Wear |
| 13 | " | 500 | 2900 | " |
| 14 | $80Si_3N_4$-$5Al_2O_3$-$15Y_2O_3$ | 500 | 2800 | " |
| 15 | $73Si_3N_4$-$15Al_2O_3$-$10Y_2O_3$-$2MgO$ | 950 | 4250 | Surface Roughness |
| 16 | $75Si_3N_4$-$15Al_2O_3$-$10Y_2O_3$ | 700 | 3200 | Surface Wear |
| 17 | " | 500 | 2600 | " |
| 18 | $72Si_3N_4$-$10Al_2O_3$-$8YN$-$10WC$ | 500 | 2550 | " |
| 19 | $70Si_3N_4$-$8Al_2O_3$-$7Ce_2O_3$-$15Mo_2C$ | 500 | 2300 | " |

Example 20

To $Si_3N_4$ were added $Al_2O_3$ 20 weight % and AIN 10 weight % and the mixture was pulverized by means of a ball mill.

The powder thus obtained was pressed and sintered in an atmosphere of $N_2$ gas at 1650—1850°C for about 4 hours.

Rolling rolls were produced from the sintered compacts thus obtained and used as the 10th step of the rolling rolls for finishing.

As a result, the rolling amount of the rolling material until the useful life of the roll expired was 2560 tons, while the temperature of the rolling material was 500°C.

Examples 21—23

To $Si_3N_4$ were added to $Al_2O_3$ 25 weight % and AIN 5 weight %, and the mixture was sintered by the same method as in Example 1 to obtain rolling rolls.

Rolling material was rolled by the rolls thus obtained at rolling temperatures of 900°C, 700°C and 500°C respectively. The useful life of each roll was tested to obtain the result as shown in Table 3.

The useful life expired with about the same rolling amount at the rolling temperatures of 900°C and 700°C, while the rolling amount even decreased at 500°C.

Examples 24—26

To $Si_3N_4$ were added $Al_2O_3$ 35 weight % and AIN 5 weight % the mixture thus obtained was pulverized by means of a ball mill and made into rolling rolls by the same method as in Example 1.

Rolling material was rolled at rolling temperature of 900°C, 700°C and 500°C respectively to test the useful life of the roll. The results were as shown in Table 3.

5

TABLE 3

| Example | Composition (wt%) | Rolling temperature (°C) | Rolling amount (ton) | Cause of expiration of life |
|---|---|---|---|---|
| 20 | 70Si₃N₄-20Al₂O₃-10AlN | 500 | 2560 | Surface Wear |
| 21 | 70Si₃N₄-25Al₂O₃-5AlN | 900 | 3300 | Surface Roughness |
| 22 | " | 700 | 3300 | Surface Wear |
| 23 | " | 500 | 2500 | " |
| 24 | 60Si₃N₄-35Al₂O₃-5AlN | 900 | 3600 | Surface Roughness |
| 25 | " | 700 | 3250 | Surface Wear |
| 26 | " | 500 | 2700 | " |

Example 27

From a mixture of Si₃N₄ 80 weight %, SiC 10 weight %, Y₂O₃ 5 weight % and MgO 5 weight % were produced guide rollers for use in aluminum wire drawing by the same method as in Example 1.

The sintering temperature was 1700°C.

A comparative test was made to compare the useful life of the guide rollers of this Example with that of the commercial cemented carbide guide rollers and that of alumina ceramic guide rollers. The results were as shown in Table 4. It has been attested that the guide rollers according to this Example are by far the best.

The speed was 15 m/sec and the temperature was 500°C.

TABLE 4

| | Useful life (ton) | Cause of expiration of life |
|---|---|---|
| Rolls of Example | 15000 | Wear |
| Ultrahard Alloy Rolls | 2000 | Surface Roughness |
| Alumina Ceramic Rolls | 2900 | Crack |

**Claims**

1. A method for the hot plastic deformation of a nonferrous metal selected from Cu, Al, Zn, Sn, Ni, Co, Ti and alloys thereof, characterised in that there is used as a deformation tool a Si₃N₄ sintered compact containing Si₃N₄ in an amount over 50% by weight and having a porosity below 10%.

2. A method as defined in claim 1, characterised in that the sintered compact contains, in addition to Si₃N₄, at least one component selected from AlN, Al₂O₃, Y₂O₃, YN, WC, Mo₂C, MgO, CaO, Ca₃N₂, ZrO₂, TiO₂, HfO₂, SiC, CeO₂, BeO, Be₃N₂, TiN, Mg₃N₂ and Al in an amount of 1—50% by weight.

3. A method as defined in claim 1, characterised in that the sintered compact contains, in addition to Si₃N₄, at least one component selected from among Al₂O₃, MgO, Mg₃N₂, BeO, Be₃N₂, CaO, Ca₃N₂, WC and Mo₂C in an amount of 0.1—20% by weight.

4. A method as defined in claim 1, characterised in that the sintered compact, contains, in addition to Si₃N₄, at least one component selected from the oxides, carbides, nitrides, borides, silicides of elements of Group IIIA of the Periodic Table such as Y and Ce in an amount 0.1—25% by weight, and one component selected from Al₂O₃, AlN and Al in an amount of 0.1—25% by weight.

5. A method as defined in claim 4, characterised in that the sintered compact contains, in addition to Si₃N₄, TiO₂ or TiN and/or MgO in an amount of 0.1—5% by weight.

6

6. A method as defined in claim 1, characterised in that the sintered compact contains $Al_2O_3$ 10—35 weight % and AlN 5—10% by weight in addition to $Si_3N_4$.

**Patentansprüche**

1. Verfahren zur heißplastischen Formung eines Nichteisenmetalls, das aus Cu, Al, Zn, Sn, Ni, Co, Ti und deren Legierungen ausgewählt ist, dadurch gekennzeichnet, daß als Formungswerkzeug ein $Si_3N_4$-Sinterpreßling verwendet wird, der $Si_3N_4$ mit einem Betrag über 50 Gew.-% und mit einer Porosität unter 10% enthält.

2. Verfahren nach Anspruch 1, dadurch gekennzeichnet, daß der Sinterpreßling zusätzlich zu $Si_3N_4$ wenigstens eine Komponente enthält, die aus AlN, $Al_2O_3$, $Y_2O_3$, YN, WC, $Mo_2C$, MgO, CaO, $Ca_3N_2$, $ZrO_2$, $TiO_2$, $HfO_2$, SiC, $CeO_2$, BeO, $Be_3N_2$, TiN, $Mg_3N_2$ und Al mit einem Betrag von 1—50 Gew.-% ausgewählt ist.

3. Verfahren nach Anspruch 1, dadurch gekennzeichnet, daß der Sinterpreßling zusätzlich zu $Si_3N_4$ wenigstens eine Komponente enthält, die aus $Al_2O_3$, MgO, $Mg_3N_2$, BeO, $Be_3N_2$, CaO, $Ca_3N_2$, WC und $Mo_2C$ mit einem Betrag von 0,1 bis 20 Gew.-% ausgewählt ist.

4. Verfahren nach Anspruch 1, dadurch gekennzeichnet, daß der Sinterpreßling zusätzlich zu $Si_3N_4$ wenigstens eine Komponente enthält, die aus den Oxyden, Karbiden, Nitriden, Boriden und Siliziden der Elemente der Gruppe IIIA des Periodischen Systems der Elemente, z.B. Y und Ce, mit einem Betrag von 0,1 bis 25 Gew.-% ausgewählt ist und daß eine Komponente aus $Al_3O_2$, AlN und Al mit einem Betrag von 0,1 bis 25 Gew.-% ausgewählt ist.

5. Verfahren nach Anspruch 4, dadurch gekennzeichnet, daß der Sinterpreßling zusätzlich zu $Si_3N_4$ enthält $TiO_2$ oder TiN und/oder MgO mit einem Betrag von 0,1 bis 5% Gew.-%.

6. Verfahren nach Anspruch 1, dadurch gekennzeichnet, daß der Sinterpreßling $Al_2O_3$ mit 10 bis 35 Gew.-% und AlN mit 5 bis 10 Gew.-% zusätzlich zu $Si_3N_4$ enthält.

**Revendications**

1. Procédé pour la déformation plastique à chaud d'un métal non ferreux choisi parmi Cu, Al, Zn, Sn, Ni, Co, Ti et leurs alliages, caractérisé en ce qu'on utilise comme outil de déformation un comprimé fritté de $Si_3N_4$ contenant du $Si_3N_4$ en une quantité de plus de 50% en poids et ayant une porosité inférieure à 10%.

2. Procédé suivant la revendication 1, caractérisé en ce que le comprimé fritté contient, outre le $Si_3N_4$, au moins un composant choisi parmi AlN, $Al_2O_3$, $Y_2O_3$, YN, WC, $Mo_2C$, MgO, CaO, $Ca_3N_2$, $ZrO_2$, $TiO_2$, $HfO_2$, SiC, $CeO_2$, BeO, $Be_3N_2$, TiN, $Mg_3N_2$ et Al en une quantité de 1—50% en poids.

3. Procédé suivant la revendication 1, caractérisé en ce que le comprimé fritté contient, outre le $Si_3N_4$, au moins un composant choisi parmi $Al_2O_3$, MgO, $Mg_3N_2$, BeO, $Be_3N_2$, CaO, $Ca_3N_2$, WC et $Mo_2C$ en une quantité de 0,1—20% en poids.

4. Procédé suivant la revendication 1, caractérisé en ce que le comprisé fritté contient, outre le $Si_3N_4$, au moins un composant choisi parmi les oxydes, carbures, nitrures, borures et siliciures d'éléments du groupe IIIA du tableau périodique tels que Y et Ce en une quantité de 0,1—25% en poids, et un composant choisi entre $Al_2O_3$, AlN et Al en une quantité de 0,1—25% en poids.

5. Procédé suivant la revendication 4, caractérisé en ce que le comprimé fritté contient, outre le $Si_3N_4$, du $TiO_2$ ou TiN et/ou du MgO en une quantité de 0,1—5% en poids.

6. Procédé suivant la revendication 1, caractérisé en ce que le comprimé fritté contient 10—35% en poids d'$Al_2O_3$ et 5—10% en poids d'AlN et plus du $Si_3N_4$.

FIG   1

(A)                    (B)

FIG   2